(19) Europäisches Patentamt
European Patent Office
Office européen des brevets

(11) **EP 4 040 213 A1**

(12) # EUROPEAN PATENT APPLICATION

(43) Date of publication:
**10.08.2022 Bulletin 2022/32**

(21) Application number: **21305171.7**

(22) Date of filing: **09.02.2021**

(51) International Patent Classification (IPC):
**$G02B\ 23/24$** (2006.01)     **$G01J\ 1/00$** (2006.01)

(52) Cooperative Patent Classification (CPC):
**G02B 23/00; G01S 3/7867**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Miratlas**
**04800 Gréoux-Les-Bains (FR)**

(72) Inventor: **JABET, Frédéric**
**04800 GREOUX-LES-BAINS (FR)**

(74) Representative: **Med'inVent Consulting**
**Espace Mistral Bâtiment A**
**297, avenue du Mistral**
**13705 La Ciotat Cedex (FR)**

(54) **COMPACT DIFFERENTIAL IMAGE MOTION MONITOR**

(57)     The invention relates to a compact differential image motion monitor comprising a first and a second optical tube assemblies (100L, 100R), each provided with a camera (200). The first and second optical tube assemblies (100L, 100R) are affixed to an support element (50, 51L, 51R, 52, 53) for maintaining them in parallel, pointing a same direction. The compact differential image motion monitor comprises a central processing unit (300) connected to the cameras (200), wherein the central processing unit (300) is controlling the cameras (200) for taking a set of synchronized images (500L, 500R) from the cameras (200) and wherein the central processing unit (300) is arranged for extracting, from the set of synchronized images (500L, 500R), at least one measure of a parameter representative of optical turbulence in the atmosphere.

Fig.1

Processed by Luminess, 75001 PARIS (FR)

## Description

Field of the invention

The present invention relates to a device for measuring atmospheric turbulence and isoplanetism angle, and more particularly to a compact differential image motion monitor. More generally, the measuring device of the invention aims to characterize the optical distortions of the atmosphere.

Background of the invention

The phenomena of optical aberrations linked to atmospheric turbulence cause a change in refractive index. This change in refractive index can cause the light rays to deviate. Such deviations of light can be seen with the naked eye. As an example, by observing the horizon in hot weather or by looking through a fire, a blurry or moving image may be perceived. These phenomena are well known to astronomers and impact drastically telescope's resolution.

In order to compensate optical aberrations, it is known to characterize said turbulences using various parameters. The strength of the turbulence can be measured using Fried's criterion, commonly known as $r_0$, which determines telescope optimal aperture for a given turbulence level. This turbulence is also commonly called Seeing or star image FWHM (Full Width at Half Maximum). Fried's criterion ro and Seeing represent a measure of the turbulence level. An isoplanetism angle $\theta_0$ determines the angle at which an observation undergoes the same deformation, thus defining the spatial validity domain of the Seeing. These measurements are well known to astronomers and those skilled in the art can refer to the various publications on optical turbulence measurements to know how to interpret and use these various measurements.

To carry out such measurements, it is necessary to use a Seeing monitor like a Differential Image Motion Monitor (DIMM). Typically, a DIMM consists in a telescope provided with a mask and a camera, for pointing a reference star. The mask mainly has two spaced holes of the same diameter, one or both holes having a prism to deflect the incoming beams. Thanks to the mask, the camera can take an image on which the pointed star corresponds to two split stars. From a series of successive images on which we measure the distance between the split stars, it is possible to calculate the Seeing, the Fried criterion ro, the isoplanetism angle $\theta_0$.

Furthermore, optical space telecommunications have been developing since the early 2000s to allow satellites to increase the transmission data rate. The use of lasers makes it possible to establish communications at speeds comparable to those of optical fiber. However, the optical links between a satellite and a ground station are subject to atmospheric turbulence that reduces the achievable bandwidth on the feeder link. Optical turbulence measurements should be able to be taken in order to assess a given site prior ground station deployment, or during operations for network planning.

The use of a DIMM would be very satisfactory in terms of the measurements. However, it has the drawback of requiring a large telescope, that is to say a large aperture, in tens of centimeters, receiving a mask and a focal length of several meters. This kind of telescope is relatively bulky and expensive, requires a motorized mount to follow the reference star, and regular maintenance operations are necessary to keep it in operation. In addition, such a telescope must be placed in an observatory dome to be insensitive to wind and weather. Current DIMMs happen to be restricted for observatory uses. There is a need for an equivalent device less expensive, easy to use for a large-scale deployment in ground optical communication relays.

Summary of the invention

The invention provides a compact DIMM, small in size, insensitive to weather conditions and requiring no maintenance operations in order to be able to be deployed on a large scale. The invention mainly proposes to use two optical tube assemblies each equipped with a camera and mechanically connected to each other by a frame keeping them pointed in the same direction.

More particularly, the invention provides a compact differential image motion monitor comprising a first optical tube assembly provided with a first image sensor, a second optical tube assembly identical to the first optical tube assembly provided with a second image sensor, an support element affixed to the first optical tube assembly and the second optical tube assembly and a central processing unit connected to the first and second image sensors. The support element is affixed to the first optical tube assembly and the second optical tube assembly for maintaining them in parallel, wherein the support element maintains the first and second optical tube assemblies pointing a same direction with a fixed separation distance between optical centers of said first and second optical tube assemblies. The central processing unit is connected to the first and second image sensors, wherein the central processing unit is controlling the first and second image sensors for taking a set of synchronized images from the first and second image sensors and wherein the central processing unit is arranged for extracting, from the set of synchronized images, at least one measure of a parameter representative of optical turbulence in the atmosphere.

The use of two optical tube assemblies instead of one allows to strongly reduces the size of the DIMM. Smaller optical tube assemblies having a short focal length, they have a larger angle of aperture requiring less precision to point a reference star which is easier to use.

Preferentially, each of the first and second optical tube assemblies can comprise a focal distance lower than half a meter and an aperture comprised between three and ten centimeters, and wherein the separation distance is comprised between fifteen and fifty centimeters.

In a preferred embodiment allowing the full tracking of Polaris without moving the compact DIMM, the focal distance can be equal to seventeen centimeters, the aperture can be equal to five centimeters and the separation distance can be equal to twenty centimeters.

For simplifying the computation, each image sensor can be a rectangular or a square sensor having one side aligned in parallel with an axis passing through the optical centers of the first and second optical tube assemblies.

For the purpose of a permanent external use of the invention, bodies of first and second optical tube assemblies can be made of materials insensitive to temperature. In addition, the first and second optical tube assemblies can be waterproof.

For reducing light pollution of the objective lens, each of the first and second optical tube assemblies can comprise a sun visor.

According to another aspect, the invention provides a measurement method for measuring parameters representative of optical turbulence in the atmosphere with two optical tube assemblies pointing a reference star, each optical tube assembly being provided with a camera. The measurement method comprises the steps of:

- sending commands to cameras for taking each a set of synchronized images, wherein the images are taken simultaneously on the two cameras,
- defining an area of interest on a first image of the sets, the area of interest including the reference star, and applying the area of interest to all images to obtain reduced images,
- determining a relative position of the reference star on the area of interest for each reduced image,
- computing the differences between the relative positions of the reference star for each pair of synchronized images,
- determining the parameters representative of the optical turbulence as a function of the differences.

## Brief description of the drawings

Fig.1 shows a perspective view of the invention,
Fig.2 shows an example of telescope of the invention in longitudinal section,
Fig.3 shows a detail of the placement of the sensors according to a preferred embodiment of the invention,
Fig.4 is a measurement flowchart performed with the invention,
Fig.5 illustrates the first step of the flowchart of figure 4,

Fig.6 illustrates the third step of the flowchart of figure 4.

## Detailed description of the invention

The principle of the DIMM is to film the evolution of the image splitting of a reference star through two apertures distant from each other. The invention maintains this general principle by using two optical tube assemblies instead of one to achieve the same result. The invention provides a Compact Differential Image Motion Monitor (hereinafter C-DIMM) using two small telescopes to be freed from many constraints compared to conventional DIMM with a single telescope. Nevertheless, the C-DIMM reuses the same general principle of calculation of Seeing, of the criterion of Fried ro, and of the isoplanetism angle $\theta_0$.

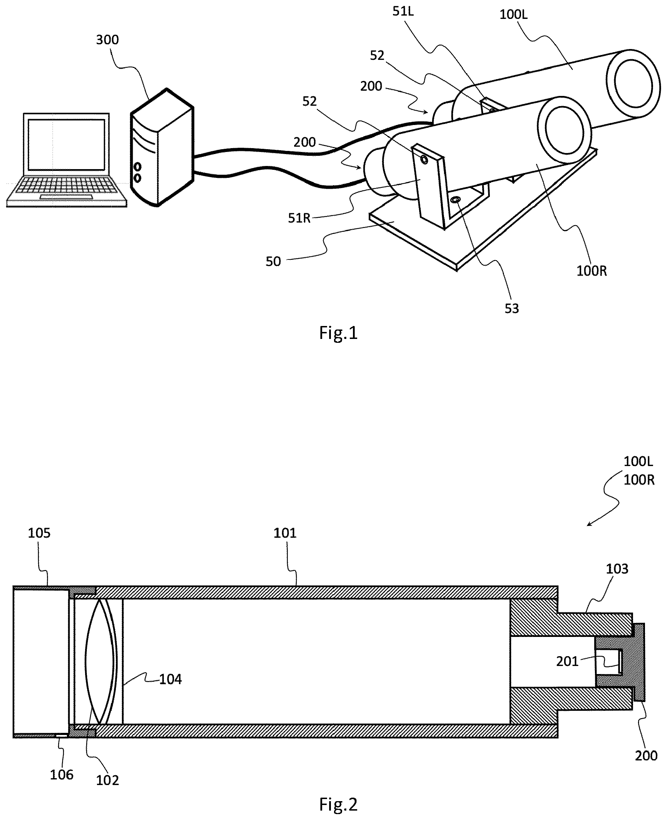

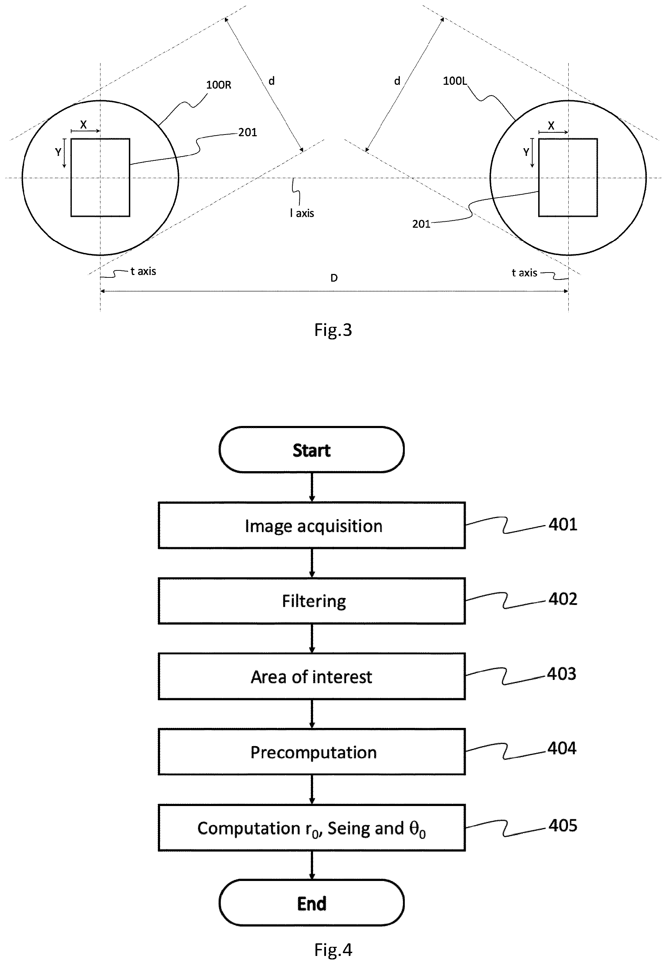

The C-DIMM according to the invention is shown on figure 1 and described in more detail using together Figures 2 and 3. The same references are used to designate the same constituent elements of the invention. The C-DIMM mainly comprises two telescopes 100L and 100R, each provided with a camera 200 connected to a central processing unit 300. According to the invention, the telescopes 100L and 100R are affixed to a mounting plate 50 so as to be arranged in parallel and point in the same direction. As it will be explained the size of the telescopes are relatively small, easy to install outdoors. So, the telescopes 100L and 100R could be used for nomadic measure or installed on the roof of a building with the computer inside the building at few tens of meters.

The central processing unit 300 is for example a computer having one or more input / output interfaces connected to the cameras 200 in order to control said cameras and to receive the images from the cameras 200. Many interfaces can be used, the man of the art could choose the interface depending of the capability of the cameras and of the distance between the telescopes 100L and 100R and the central unit, which depend of the type of use of the C-DIMM. An important thing is that the central processing unit can send simultaneous or synchronized commands to achieve synchronized images. At the reception of images by the central unit 300, said processing unit 300 implements the processing algorithms which make it possible to compute the Fried criterion ro, the Seeing, and the isoplanetism angle $\theta_0$.

In the described example, the fixing of the telescopes 100L and 100R on the fixing plate 50 is carried out through two U-shape stirrup 51L and 51R enclosing the telescopes 100L and 100R. Each U-shape stirrup 51L or 51R is provided with holes at the end of its legs to accommodate clamping screws 52 to secure the 100L or 100R telescope. Each U-shape stirrup 51L or 51R also comprises a central hole to receive a fixing screw 53 to be fixed to the fixing plate 50. The use of clamping screws 52 and fixing 53 also makes it possible to adjust the direction of each telescope 100L or 100R in rotation and in elevation. A parallelism error is possible without influence on the measurement if this parallelism error is constant during the few seconds of image shooting corresponding to a measurement. Thus, an expansion of the fixing system linked to the temperature will not disturb the carried-out measurement. Nevertheless, it is preferable to have fixing elements made of a material with a low dilation coefficient. As an example, the fixing plate 50 and the U-shape stirrups 51L and 51R could be in aluminum.

Many other fixing systems for telescopes 100L and 100R are possible. The two telescopes 100L and 100R can be made in a one-piece body forming a single telescope having two optical tube assemblies. What is important for the invention is that two independent optical tube assemblies, corresponding the two telescopes 100L and 100R, are kept pointed parallel in the same direction. The man of the art can use any kind of support that can maintain the two optical tube assemblies fixed together.

Figure 2 shows an example of a telescope 100L or 100R which mainly comprises a tubular body 101 supporting objective lens 102 and 104 at one end and an eyepiece holder 103 at its other end. The eyepiece holder 103 supports an image sensor 201 of the camera 200. For avoiding chromatic aberration, the objective lens 102 and 104 forms an aplanatic achromatic objective focusing directly on the image sensor 201. In order to reduce maintenance operations, it is preferred to have a fixed focal length. For this purpose, the tubular body 101, the lenses 102 and 104 and the eyepiece holder 103 are fixed together with precision. In order to avoid a change of focus due to temperature variations, bodies of the telescopes 100L and 100R, constituted of the tubular body 101 and the eyepiece holder 103, are made of materials insensitive to temperature variations. As an example, the tubular body 101 can be made of carbon fiber and the eyepiece holder 103 can be made of ceramic.

To reduce the incidental stray light, the tubular body 101 can be provided with a sun visor 105 at the aperture of the telescope 100L or 100R. The additional advantage of using a sun visor 105 is that it protects the objective lens 102 from rain. In order to avoid an accumulation of water in the sun visor 105, it is preferable to drill a hole 106 on its bottom part.

Considering an external use of the telescope, it is preferable to seal the tubular body 101, the objective lens 102, the eyepiece holder 103 and the camera 200 in such a way to make each telescope waterproof. Another advantage of the small size of the telescope is that it is easier to make it waterproof because the number of external elements is reduced and standard joint can be used.

The invention is not limited to the telescope example of Figure 2 and many variations are possible. By way of example, the tubular body 101 and the eyepiece holder 103 can be mounted with a focal length adjustment mechanism as well known in the art. The number of lenses can be different, it is also possible to use concave mirrors in replacement or in addition to the lenses. Any kind of telescope can be used as long as it can support a camera and corresponds to the requirements indicated in the following paragraphs.

In the invention, each 100L or 100R telescope performs the same function of one hole of the mask used in prior art DIMM. Thus, the aperture of each telescope 100L or 100R can be reduced to the size of the holes made in the masks of the state of the art. Each telescope 100L or 100R can thus have an aperture comprised between three and ten centimeters. Such an aperture corresponds to telescopes with a focal length of less than half a meter which enable to have a reduced size of the C-DIMM. The distance between the telescopes 100L and 100R corresponds to the hole spacing on the mask of conventional DIMM. The spacing of the telescopes will be chosen according to the aperture of the telescopes. Depending of the aperture, the spacing of the optical centers of the telescope 100L and 100R will be chosen between fifteen and fifty centimeters. A person skilled in the art will be able to adjust these dimensions according to the precision for the measurement.

In a preferred embodiment, the 100L and 100R telescopes each have an aperture of five centimeters and a focal length of seventeen centimeters, the spacing between the optical centers being twenty centimeters. Among other things, the choice of such an aperture and such a focal length to a sufficiently large aperture angle which makes it possible to follow the course of a reference star, such as Polaris, without having need to move the telescopes. Thus, the mounting plate 50 can be fixed immovably on the roof of a building without the need to readjust the direction of the telescopes 100L and 100R.

The aperture angle of the 100L and 100R telescopes determines the choice of the image sensor 201. Indeed, each pixel corresponds to a fraction of the aperture angle corresponding to the aperture angle divided by the number in a line or column of pixel. The image sensor 201 is a monochrome sensor chosen to have the best compromise in term of resolution, sensitivity, image acquisition time, frame rate and also signal to noise ratio. Typically, the resolution is chosen so that each pixel has a resolution on the order of 2 to 3 arc seconds. The image acquisition time should be the shortest and the frame rate should be as highest as possible. In addition, the sensitivity must be relatively high with a large signal to noise ratio. The shape of the square or rectangular sensor does not matter

As an example, the image sensor 201 can be a monochrome CMOS back-illuminated sensor with a resolution of six million pixels which corresponds to 2,9 arcseconds per pixel. CMOS back-illuminated sensors have the advantage to provide a high sensibility and a high signal to noise ratio. The selected sensor can have an acquisition time of five milliseconds and a frame rate of one hundred and forty hertz.

In order to explain the various calculations that will be performed, Figure 3 illustrates the different parameters used. Figure 3 schematically shows the telescopes 100L and 100R viewed in the direction of their pointing axis. A longitudinal axis (hereinafter l-axis) passes through the optical centers of the two telescopes 100L and 100R. A transverse axis (hereinafter t-axis) corresponds to an axis perpendicular to the l-axis. Furthermore, the separation distance D corresponds to the distance between the optical centers of the two telescopes 100L and 100R. The aperture d is the diameter of the objective lens of each of the telescopes 100L and 100R. In order to simplify calculations performed along the longitudinal axis and the transverse axis, one side of the image sensors 201 is aligned in parallel with l-axis. Thus, the abscissas X and ordinates Y of the pixels of the image sensors 201 correspond directly to measurements taken along l-axis and t-axis.

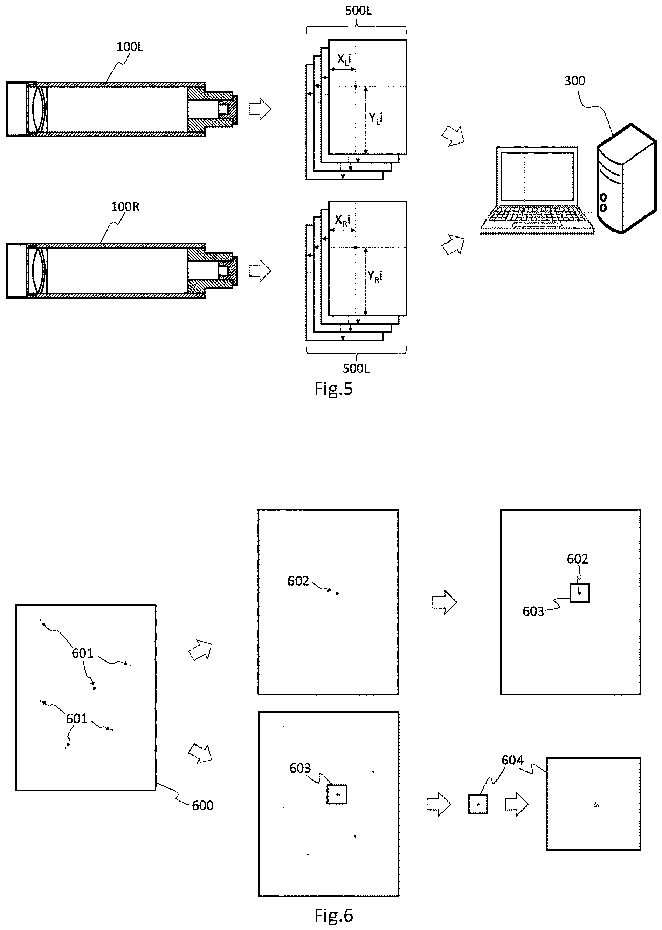

The processing method is explained with the flowchart of figure 4. A first step 401 consists in the image acquisition. As illustrated by figure 5, the first step 401 of image acquisition is made by the central processing unit 300 and the cameras 200. The central processing unit 300 sends simultaneous commands to the camera 200 in such a way that each image sensor 201 takes a set 500L and 550R of synchronized images. The images of each set 500L and 500R should be made sensibly at the same time for each telescope 100L and 100R to be synchronized. Considering an acquisition time of five milliseconds for each image, a synchronization error of fifty microseconds between the cameras of the two telescope 100L and 100R is acceptable. The sets 500L and 500R are provided to the central processing unit 300. As an example, one set 500L or 500R can comprise one thousand of images for having a sufficient precision, nevertheless the number of images in a set could be adapted. The time acquisition of one thousand images at a frame rate of one hundred and forty hertz is around seven seconds.

After reception of the images, the central processing unit will perform a second step 402 for filtering images. The filtering is made for different purpose. The filtering is related to noise suppression for all images. This can be made by the comparison of the level of each pixel with a threshold. All the pixels with a level below the threshold are then put at zero level. The threshold is determined to correspond to a low level of luminosity which cannot be considered as the luminosity of a star.

After Noise suppression, a third step 403 is made for determining an area of interest. With a large angle of aperture, it is possible that several stars are visible on each image. Taking into consideration that the computation is based on the variance of the differences of position of the reference star, a relative movement between synchronized images is sufficient. So, only a part of each image can be used for the computation. In this third step 403 all images will be reduced to an area of interest in such a way to have only the star of interest in the area of interest. The area of interest will be determined on the first image of each set 500L and 500R and then it will be applied to all images of corresponding set 550L and 500R. The third step 403 is illustrated on figure 6. The first image 600 may comprise several stars 601 corresponding each to one or more pixels. The star of interest is the brightest star, but the brightest star does not necessarily correspond to the pixel of the highest level because the luminosity of the reference star can be shared between several pixels while the luminosity of another star can be concentrated on a single pixel. For correcting this phenomenon, a spatial averaging filter is passed onto the whole image for making the luminosity of each star more homogeneous on groups of pixels corresponding to a star. After the spatial filtering, a detection of the most luminous pixel 602 is made, said most luminous pixel 602 corresponding to the reference star. The area of interest 603 is determined to be a square of pixels centered onto the most luminous pixel 602 of the first image. The size of the area of interest is chosen to be large enough to contain all pixels related to the light spread related to the tip tilt effect. As an example, the area of interest can be a square having a side of sixty-four pixels. After the area of interest is determined for the first image of each set 500L and 500R of images, the area of interest is applied to all images of the set for having small images 604 for computation.

In a variant, a single area of interest can be determined for the two sets of images, but it should take into account the tolerance error of parallelism and of assembling. In that case, determination of the single area of interest can be determined on a single image but with a more important size. Determination of a single area of interest can be made also on the first images of each set of images, After the detection of the reference star on first images of each set, an average of the position is used for centering the area of interest and the size can be also adjusted by addition of the number of pixels separating the two most luminous pixels 602, which correspond to a parallelism or pointing error of the telescope. The man of the art should understand that such parallelism or pointing error has no impact for the computation of parameters because the error is a constant for pair of synchronized images.

Based on the small images 604, a pre-computation step 404 is performed by the central processing unit. Firstly, the position of the reference star is determined for each small image by making a barycenter based on the luminosity of each pixel. The position in the small image could be a relative position inside the small image that is obtained by the following formulas:

$$Xi = \frac{\sum_{j,k=0}^{n} j \times I(j,k)}{n^2}$$

$$Yi = \frac{\sum_{j,k=0}^{n} k \times I(j,k)}{n^2}$$

wherein n is a number of pixels per side of the small image, j is a pixel abscissa and k is a pixel ordinate in the small image, I(j,k) is the intensity of the pixel having coordinates j and k; and Xi and Yi correspond to abscissa and ordinate of the star in the $i^{th}$ small image 604 of one set 500L or 500R. With such a computation of the position of the star, the location precision is lower than the pixel size.

Having the position on the star on each small image, the computation step 405 can be performed and corresponds globally to the computation made in prior art DIMM, with very few changes. Firstly, the difference of position is computed for each pair of synchronized images:

$$\Delta Xi = Xi_L - Xi_R$$

$$\Delta Yi = Yi_L - Yi_R$$

wherein $Xi_L$, $Xi_R$, $Yi_L$ and $Yi_R$ correspond to abscissa and ordinate of the reference star position in the $i^{th}$ images of respectively the two sets 500L and 500R; and $\Delta Xi$ and $\Delta Yi$ correspond to a relative difference in abscissa and ordinate of the reference star position for the $i^{th}$ pair of synchronized images. As indicated before, with a position of the image sensors 201 aligned in parallel with longitudinal axis l-axis, the difference in abscissa $\Delta Xi$ corresponds directly to the difference of position according to the longitudinal axis and the difference in ordinate $\Delta Yi$ corresponds directly to the difference of position according to the transversal axis. If the image sensors are not aligned, it is necessary to make a transposition of the coordinate before making the differences.

Having the differences $\Delta Xi$ and $\Delta Yi$ for all pair of images according to l-axis and t-axis, the variances $\sigma_l^2$ and $\sigma_t^2$ can be computed with the following formulas:

$$\sigma_l{}^2 = \left( \frac{1}{m} \sum_{i=1}^{m} \Delta Xi^2 \right) - \left( \frac{1}{m} \sum_{i=1}^{m} \Delta Xi \right)^2$$

$$\sigma_t{}^2 = \left( \frac{1}{m} \sum_{i=1}^{m} \Delta Yi^2 \right) - \left( \frac{1}{m} \sum_{i=1}^{m} \Delta Yi \right)^2$$

wherein m is the number of images in a set 500L or 500R of images.

Then is possible to compute the Fried criterion ro with the following formulas:

$$r_{0l} = \left[ \frac{\sigma_l{}^2}{2\lambda^2 \times \left( 0{,}179 d^{-\frac{1}{3}} - 0{,}145 D^{-\frac{1}{3}} \right)} \right]^{-\frac{3}{5}}$$

$$r_{0t} = \left[ \frac{\sigma_t{}^2}{2\lambda^2 \times \left( 0{,}179 d^{-\frac{1}{3}} - 0{,}097 D^{-\frac{1}{3}} \right)} \right]^{-\frac{3}{5}}$$

$$r_0 = \frac{r_{0l} + r_{0t}}{2 \times (\cos Z)^{0{,}6}}$$

wherein $r_{0l}$ et rot are the sub-components according l-axis and t-axis for the computation of the ro, $\lambda$ is the wavelength corresponding to green light in the visible spectrum (i.e. 550 nanometers), d corresponds to the aperture and D is the separation distance as detailed on figure 3, Z is the zenithal angle of the each telescope.

Then, the Seeing can be deduced from the r0 with the following formula:

$$Seeing = \frac{0{,}98 \times \lambda}{r_0}$$

The isoplanetism angle $\theta_0$ for an aperture d of five centimeters is given by the following formula:

$$\theta_0 = (0.64 \left[ \frac{4}{[\sigma_l{}^2]^{0.65}} \right] (\cos Z)^{\frac{8}{5}}$$

All these formulas being adapted from prior art formulas, the man of the art can also add directly some modifications that are also possible with the invention. In particular, ro and $\theta_0$ are given with zenithal correction which is optional.

Several variants of the invention are possible. In particular, the dimensions can be changed as indicated in the description. In addition, the preferred embodiment of the invention has been described for using the pole star (Polaris) as a reference star. The solid angle in which Polaris moves allows not to have a tracking with the indicated dimensions.

In the southern hemisphere, it is not possible to use Polaris and the possible reference star could be Alpha Crucis, which moves inside a larger solid angle than Polaris. Increasing the aperture angle of the 100L and 100R telescopes for allowing the tracking with a fixed position of telescopes will have the effect of strongly reducing the measurement accuracy. Nevertheless, it is possible to place the described C-DIMM on a movable support to ensure the tracking of a reference star such as Alpha Crucis. Thus, a slow rotation of the movable support allows the tracking of Alpha Crucis without requiring high optical pointing precision because the large aperture angle of the C-DIMM allows to have a substantial pointing error. In case of use of a movable support, it is necessary to measure the azimuthal angle of the movable support to inject the angle into the computation. **[0044]** More generally, the use of a movable support can be possible also for pointing Polaris if the aperture angle does not allow to have the full course of the star. This could be the case for having more precision.

## Claims

1. Compact differential image motion monitor comprising:

   - a first optical tube assembly (100L) provided with a first image sensor (201),
   - a second optical tube assembly (100R), identical to the first optical tube assembly (100L), provided with a second image sensor (201),
   - a support element (50, 51L, 51R, 52, 53) affixed to the first optical tube assembly (100L) and the second optical tube assembly (100R) for maintaining them in parallel, wherein the support element (50, 51L, 51R, 52, 53) maintains the first and second optical tube assemblies (100L, 100R) pointing a same direction with a fixed separation distance (D) between optical centers of said first and second optical tube assemblies (100L, 100R), and
   - a central processing unit (300) connected to the first and second image sensors (201), wherein the central processing unit (300) is controlling the first and second image sensors (201) for taking a set of synchronized images (500L, 500R) from the first and second image sensors (201) and wherein the central processing unit (300) is arranged for extracting, from the set of synchronized images (500L, 500R), at least one measure of a parameter (ro, Seeing, $\theta_0$) representative of optical turbulence in the atmosphere.

2. Compact differential image motion monitor according to claim 1, wherein each of the first and second optical tube assemblies (100L, 100R) comprises a focal distance lower than half a meter and an aperture (d) comprised between three and ten centimeters, and wherein the separation distance (D) is comprised between fifteen and fifty centimeters.

3. Compact differential image motion monitor according to claim 2, wherein the focal distance is equal to seventeen centimeters, the aperture (d) is equal to five centimeters and the separation distance (D) is equal to twenty centimeters.

4. Compact differential image motion monitor according to one of the preceding claims, wherein each image sensor (201) is a rectangular or a square sensor having one side aligned in parallel with an axis (I-axis) passing through the optical centers of the first and second optical tube assemblies (100L, 100R).

5. Compact differential image motion monitor according to one of the preceding claims, wherein bodies (101, 103) of first and second optical tube assemblies (100L, 100R) made of materials insensitive to temperature.

6. Compact differential image motion monitor according to the preceding claims, wherein the first and second optical tube assemblies (100L, 100R) are waterproof.

7. Compact differential image motion monitor according to one of the preceding claims, wherein each of the first and second optical tube assemblies (100L, 100R) comprises a sun visor (105).

8. Measurement method for measuring parameters representative of optical turbulence in the atmosphere with two optical tube assemblies pointing a reference star, each optical tube assembly being provided with a camera, the measurement method comprising the steps of:

   - sending (401) commands to cameras for taking each a set of synchronized images, wherein the images are taken simultaneously on the two cameras,
   - defining (403) an area of interest (603) on a first image (600) of the sets (500L, 500R), the area of interest (603) including the reference star (602), and applying the area of interest (603) to all images to obtain reduced images (604),
   - determining (404) a relative position of the reference star on each reduced image (604), and computing the differences between the relative positions of the reference star for each pair of synchronized images,
   - determining (405) the parameters representative of the optical turbulence as a function of the differences.

Fig.1

Fig.2

Fig.3

Fig.4

Fig.5

Fig.6

Europäisches
Patentamt

European
Patent Office

Office européen
des brevets

# EUROPEAN SEARCH REPORT

Application Number

EP 21 30 5171

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 127 911 B2 (VARSHNEYA DEEPAK [US]; DEEPAK VARSHNEYA [US]) 8 September 2015 (2015-09-08) * columns 4, 7 - column 12; figures 5-8 * ----- | 1-7 | INV. G02B23/24 G01J1/00 |
| X | URAGUCHI FUMIHIRO ET AL: "DIMM with large aperture separation and simultaneous seeing measurements at Mauna Kea", PROCEEDINGS OF SPIE, vol. 4837, 22 August 2002 (2002-08-22), pages 864-871, XP055842930, 1000 20th St. Bellingham WA 98225-6705 USA ISSN: 0277-786X, DOI: 10.1117/12.458226 ISBN: 978-1-5106-4548-6 * page 864 - page 867; figures 1,2 * ----- | 1-8 | |
| A | YU LONGKUN ET AL: "Mini-DIMM: theory analysis and experimental validation", OPTICAL ENGINEERING, vol. 59, no. 12, 1 December 2020 (2020-12-01), XP055842507, BELLINGHAM ISSN: 0091-3286, DOI: 10.1117/1.OE.59.12.120501 * page 3 - page 5; figure 2 * ----- | 1-8 | TECHNICAL FIELDS SEARCHED (IPC) G02B G01J |

The present search report has been drawn up for all claims

| Place of search | Date of completion of the search | Examiner |
|---|---|---|
| Munich | 23 September 2021 | Feeney, Orla |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 30 5171

This annex lists the patent family members relating to the patent documents cited in the above-mentioned European search report.
The members are as contained in the European Patent Office EDP file on
The European Patent Office is in no way liable for these particulars which are merely given for the purpose of information.

23-09-2021

| Patent document cited in search report | | Publication date | Patent family member(s) | Publication date |
|---|---|---|---|---|
| US 9127911 | B2 | 08-09-2015 | NONE | |

EPO FORM P0459

For more details about this annex : see Official Journal of the European Patent Office, No. 12/82